(19) Europäisches Patentamt
European Patent Office
Office européen des brevets

(11) EP 1 467 429 A2

(12) EUROPEAN PATENT APPLICATION

(43) Date of publication:
13.10.2004 Bulletin 2004/42

(51) Int Cl.7: H01M 10/40

(21) Application number: 04008260.4

(22) Date of filing: 05.04.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 09.04.2003 JP 2003105697

(71) Applicant: SONY CORPORATION
Tokyo (JP)

(72) Inventor: Kubota, Tadahiko
Shinagawa-ku Tokyo (JP)

(74) Representative: Müller - Hoffmann & Partner
Patentanwälte,
Innere Wiener Strasse 17
81667 München (DE)

# (54) Battery

(57) The invention provides a battery, which can improve battery performance. In the battery, a cathode and an anode are faced with a high molecular weight electrolyte in between, and wound. The anode comprises an anode current collector and an anode active material layer. The anode active material layer contains Si, Sn, or an alloy thereof. The anode active material layer is preferably formed by vapor-phase deposition method, liquid-phase deposition method, or sintering method. The anode active material layer is preferably alloyed with the anode current collector at least on part of an interface with the anode current collector. The high molecular weight electrolyte contains an electrolytic solution, and a high molecular weight compound having a structure wherein a polymerization compound having an acrylate group or a methacrylate group and containing no ether group is polymerized.

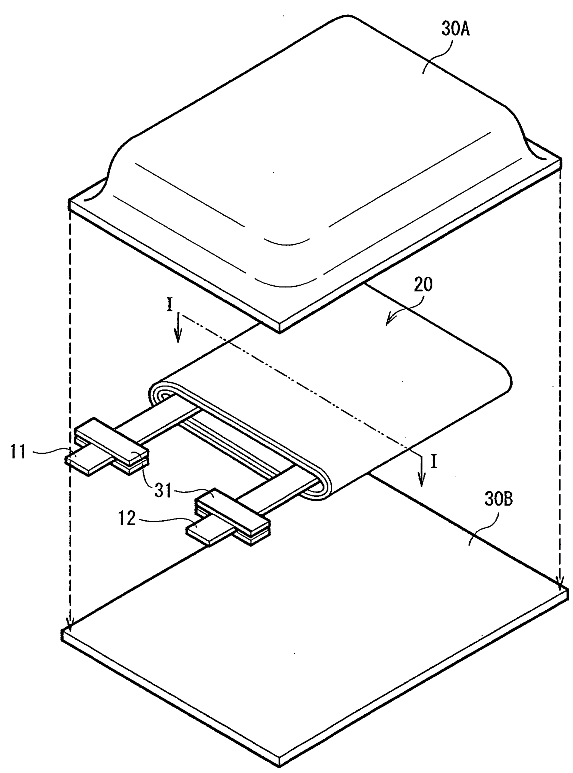


FIG. 1

EP 1 467 429 A2

## Description

BACKGROUND OF THE INVENTION

1. Field of the Invention

The present invention relates to a battery using a high molecular weight electrolyte obtained by polymerizing a polymerization compound.

2. Description of the Related Art

In recent years, many portable electronic devices such as a combination camera (video tape recorder), a mobile phone and a portable computer have been introduced. Downsizing and weight saving of these devices have been made. Along with these situations, active development of a battery, particularly a secondary battery has been promoted as a portable power source for these electronic devices. Specially, a lithium ion secondary battery has attracted attention as one which can realize a high energy density.

Conventionally, as an anode active material of the lithium ion secondary battery, carbon materials such as graphite have been mainly used. However, a theoretical capacity of the carbon materials is 372 mAh/g. That is, it has been a problem that new technology development is necessary to improve the foregoing capacity.

Therefore, recently, active researches have been made that an alloy containing silicon or tin is used as an anode active material instead of the carbon materials. However, when the alloy is used for the anode of the battery, there is a problem that an anode potential is raised, and the anode becomes fine particles due to tense expansion and shrinkage of the anode active material in repeating charge and discharge, so that cycle characteristics are poor.

In order to resolve such a problem, there is a case using a high molecular weight electrolyte formed by polymerizing and gelatinizing an electrolyte composition of matter wherein a polymerization compound and an electrolytic solution are mixed by using a polymerization initiator (refer to Japanese Unexamined Patent Application Publication No. 2000-21449 and Japanese Unexamined Patent Application Publication No. 2000-173607).

The high molecular weight electrolyte obtained by this polymerization is formed by coating an electrolyte composition of matter containing a polymerization compound on the electrode and treating with ultraviolet radiation or heating before winding the electrode; or by firstly forming a winding electrode body by winding an electrode, and then injecting the electrolyte composition of matter in the winding electrode body and heating the resultant, in the case when the high molecular weight electrolyte is used for the battery, wherein the electrode is wound, for example. As a polymerization compound used in this case, for example, poly methyl methacrylate (for example, refer to Japanese Examined Patent Application Publication No. S58-56467) and a compound having an acrylate group or an ether group (for example, refer to Japanese Examined Patent Application Publication No. H07-25838) are known. As in the foregoing Japanese Examined Patent Application Publication No. S58-56467, there are many examples, wherein an ether group is introduced into the polymerization compound. These examples are intended to promote dissociation of cations (for example, lithium ions in the case of the lithium ion secondary battery) which transport electric charge, regardless of in a whole solid state or in a gelatinous state.

In addition, various researches about electrolytic solutions have been made. For example, there is a report that low temperature characteristics can be significantly improved by applying an organic solvent wherein ethylene carbonate and ethyl methyl carbonate are mixed to oxyalkylene or an acrylate polymerization compound/a methacrylate polymerization compound having a urethane structure (for example, refer to Japanese Unexamined Patent Application Publication H10-294105).

For example, the high molecular weight electrolyte described in the foregoing Japanese Examined Patent Application Publication No. S58-56467 is suitable as a solidification method for electrolytic solutions in view of improvement of leakage resistance. However, in this case, relatively high amount of a polymerization compound is necessary. Therefore, there is a problem that a high ion conductivity, the targeted battery characteristics cannot be obtained. For example, in the high molecular weight electrolyte described in the foregoing Japanese Examined Patent Application Publication No. H07-25838, the polymerization compound has an ether group. Therefore, cations generated by dissociation are coordinated with oxygen of the ether group, mobility of cations is lowered, and a cation conductivity is lowered. Further, since oxidization resistance is low at an ether group part, its charge and discharge efficiency and storage characteristics are poor. For example, in the high molecular weight electrolyte described in the foregoing Japanese Unexamined Patent Application Publication H10-294105, though low temperature characteristics are improved, sufficient charge and discharge cycle characteristics cannot be obtained.

SUMMARY OF THE INVENTION

The invention has been achieved in consideration of such problems, and it is an object of the invention to provide a battery which can improve battery performance.

A battery of the invention comprises a cathode; an anode; and a high molecular weight electrolyte, wherein the anode contains at least one of simple substances and compounds of silicon or tin, and the high molecular weight electrolyte contains a high molecular weight compound having a structure wherein a polymerization compound having an acrylate group or a methacrylate group and containing no ether group is polymerized.

In the battery according to the invention, the high molecular weight electrolyte contains the high molecular weight compound having a structure, wherein the polymerization compound containing no ether group is polymerized. Therefore, ions transfer easily in the high molecular weight electrolyte, and a high ion conductivity can be obtained.

Other and further objects, features and advantages of the invention will appear more fully from the following description.

BRIEF DESCRIPTION OF THE DRAWINGS

Fig. 1 is an exploded perspective view, which shows a construction of a secondary battery according to an embodiment of the invention;

Fig. 2 is a cross sectional view taken along line I-I of a battery device shown in Fig. 1; and

Fig. 3 is a cross sectional view, which shows a construction of a secondary battery manufactured in Examples of the invention.

DETAILED DESCRIPTION OF THE PREFERRED EMBODIMENT

The embodiment of the invention will be described in detail hereinbelow with reference to the drawings.

Fig. 1 shows an exploded view of a secondary battery according to the embodiment of the invention. In this secondary battery, a battery device 20 to which a cathode terminal 11 and an anode terminal 12 are attached is enclosed inside film-shaped exterior members 30A and 30B. The cathode terminal 11 and the anode terminal 12 are directed from inside to outside of the exterior members 30A and 30B, and, for example, are derived in the same direction. The cathode terminal 11 and the anode terminal 12 are respectively made of a metal material such as aluminum (Al), copper (Cu), nickel (Ni), and stainless.

The exterior members 30A and 30B are made of a laminated film in the shape of a rectangle, wherein, for example, a nylon film, an aluminum foil, and a polyethylene film are bonded together in this order. The exterior members 30A and 30B are, for example, arranged so that their polyethylene film sides and the battery device 20 are faced, and respective outer edge parts are fusion-bonded or adhered to each other. Adhesive films 31 to protect from outside air intrusion are inserted between the exterior member 30A and the cathode terminal 11, and the exterior member 30A and the anode terminal 12, and the exterior member 30B and the cathode terminal 11, and the exterior member 30B and the anode terminal 12. The adhesive film 31 is made of a material having contact properties in relation to the cathode terminal 11 and the anode terminal 12. For example, when the cathode terminal 11 and the anode terminal 12 are made of the foregoing metal material, the adhesive film 31 is preferably made of a polyolefin resin such as polyethylene, polypropylene, modified polyethylene, and modified polypropylene.

The exterior members 30A and 30B can be made of a laminated film having other structure, a high molecular weight film such as polypropylene, or a metal film, instead of the foregoing laminated film.

Fig. 2 is a view showing a cross sectional structure taken along line I-I of the battery device 20 illustrated in Fig. 1. In the battery device 20, a cathode 21 and an anode 22 are faced to each other with a high molecular weight electrolyte 23 and a separator 24 in between and wound. An outermost part of the battery device 20 is protected by a protective tape 25.

The cathode 21 comprises a cathode current collector 21A having a pair of facing faces and cathode active material layer 21B provided on both sides or on a single side of the cathode current collector 21A. The cathode current collector 21A comprises an exposed part wherein no cathode active material layer 21B is provided at one end in the longitudinal direction. The cathode terminal 11 is attached to this exposed part. The cathode current collector 21A is made of, for example, a metal foil such as an aluminum foil, a nickel foil, and a stainless foil.

The cathode active material layer 21B contains, for example, one or more cathode materials capable of inserting and extracting lithium as a cathode active material, and can contain a conductive agent and a binder as necessary. As a cathode material capable of inserting and extracting lithium, for example, lithium-containing metal complex oxides expressed by a general formula of $Li_mMIO_2$ are preferable. The lithium-containing metal complex oxides can

generate a high voltage and have a high density, so that they can realize a secondary battery with a higher capacity. MI is one or more transition metals, and is preferably at least one of cobalt (Co) and nickel. m varies depending on a charge and discharge state of the battery, and generally is in the range of $0.05 \leqq m \leqq 1.10$. Concrete examples of such lithium-containing metal complex oxides include $LiCoO_2$ and $LiNiO_2$

As the cathode 21 does, the anode 22 comprises an anode current collector 22A having a pair of facing faces, and anode active material layer 22B provided on both sides or on a single side of the anode current collector 22A. The anode current collector 22A is preferably made of, for example, copper, stainless, nickel, titanium (Ti), tungsten (W), molybdenum (Mo), or aluminum. Specially, in some cases, the anode current collector 22A is preferably made of a metal easy to be alloyed with the anode active material layer 22B. For example, as described later, when the anode active material layer 22B contains at least one from the group consisting of simple substances and compounds of silicon or tin, examples of the material for the anode current collector 22A which is easy to be alloyed with the anode current active material layer 22B include copper, titanium, aluminum, and nickel. The anode current collector 22A can be composed of either a monolayer or several layers. In the case of using several layers, it is possible that a layer contacting to the anode active material layer 22B is made of a metal material easy to be alloyed with the anode active material layer 22B, and the other layers are made of other metal materials.

The anode active material layer 22B contains, for example, at least one from the group consisting of simple substances and compounds of silicon or tin as an anode active material. Simple substances and compounds of silicon or tin have high capability to insert and extract lithium, and are capable of raising an energy density of the anode 22. The compounds of silicon or tin can be either crystalline or amorphous, but are preferably a amorphous group or a microcrystal group. The foregoing amorphous or microcrystal means one whose half value width of a peak of a diffraction pattern obtained by an X-ray diffraction analysis using CuK $\alpha$ as a specific X-ray is 0.5° or more at $2\theta$, and which has a broad pattern from 30° to 60° at $2\theta$.

Examples of the compound of silicon or tin include $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, $SiO_v$ ($0<v\leqq 2$), $SnO_w$ ($0<w\leqq 2$), $SnSiO_3$, LiSiO, and LiSnO.

The anode active material layer 22B is, for example, formed by coating, and can contain a binder such as polyvinylidene fluoride in addition to the anode active material. In this case, a primary particle diameter of powders of a compound of silicon or tin is preferably from 0.1 μm to 35 μm, and more preferably from 0.1 μm to 25 μm. If a particle diameter is smaller than the foregoing range, undesirable reaction between particle surfaces and the electrolyte mentioned below becomes significant, and a capacity and efficiency may deteriorate. Meanwhile, if a particle diameter is larger than the forgoing range, reaction with lithium is hard to proceed inside the particles, and a capacity may be lowered. As a measurement method for particle diameters, observational method by an optical microscope or an electron microscope, laser diffraction method or the like can be cited. The measurement method is preferably selected depending on particle diameter ranges. In order to obtain a desired particle diameter, classification is preferably conducted. As a classification method, there is no particular limitation. A sieve, an air classifier or the like can be used by dry method or wet method.

The powders of simple substances or compounds of silicon or tin can be obtained, for example, by a conventional method used in powder metallurgy or the like. As a conventional method, for example, a method wherein a raw material is melted in a furnace such as an arc melting furnace and a high-frequency induction furnace, is quenched, and then is grinded; a method wherein a molten metal of a raw material is rapidly quenched, e.g. single-roll quenching method, two-roll quenching method, gas atomization method, water atomization method, and centrifugal atomization method; or a method wherein a molten metal of a raw material is solidified by a quenching method such as single-roll quenching method and two-roll quenching method, and then the resultant is grinded by a method such as mechanical alloying method can be cited. In particular, the gas atomization method or the mechanical alloying method is preferable. Composing and grinding them are preferably conducted in an inert atmosphere such as argon (Ar), nitrogen, and helium (He), or a vacuum atmosphere in order to prevent oxidization by oxygen in the air.

The anode active material layer 22B can be formed by at least one method from the group consisting of vapor-phase deposition method, liquid-phase deposition method, and sintering method. Using such methods is preferable by reasons of the followings. That is, destruction of the anode active material layer 22B due to its expansion and shrinkage according to charge and discharge can be inhibited, the anode current collector 22A and the anode active material layer 22B can be integrated, and electron conductivity in the anode active material layer 22B can be improved. In addition, a binder, voids and the like can be reduced or excluded, and the anode 22 can be made a thin film.

This anode active material layer 22B is preferably alloyed with the anode current collector 22A at least on part of the interface with the anode current collector 22A. Specifically, it is preferable that, on the interface between the anode active material layer 22B and the anode current collector 22A, composition elements of the anode current collector 22A are diffused in the anode active material layer 22B, or composition elements of the anode active material are diffused in the anode current collector 22A, or both of them are diffused respectively. This alloying often arises simultaneously with forming the anode active material layer 22B by vapor-phase deposition method, liquid-phase deposition method, or sintering method. However, it is possible that this alloying arises by further heat treatment.

A thickness of the anode 22 including a thickness of the anode current collector 22A is preferably from 10 μm to 100 μm, and more preferably from 10 μm to 50 μm. When it is too thin, a battery capacity is lowered since a portion of the anode current collector 22A in the anode 22 increases. Meanwhile, when it is too thick, destruction of the anode active material layer 22B may arise due to expansion and shrinkage of silicon or tin according to charge and discharge.

The high molecular weight electrolyte 23 contains an electrolytic solution and a high molecular weight compound. The electrolytic solution is one wherein an electrolyte salt is dissolved in a solvent, and can contain an additive as necessary. Examples of the solvent include nonaqueous solvents, for example, lactone solvents such as γ-butyrolactone, γ-valerolactone, δ valerolactone, and ε-caprolactone; carbonate solvents such as ethylene carbonate, propylene carbonate, butylene carbonate, vinylene carbonate, dimethyl carbonate, ethyl methyl carbonate, and diethyl carbonate; ether solvents such as 1,2-dimethoxy ethane, 1-ethoxy-2-methoxy ethane, 1,2-diethoxy ethane, tetrahydrofuran, and 2-methyl tetrahydrofuran; nitrile solvents such as acetonitrile; sulfolane solvents; phosphoric acids; phosphoric acid ester solvents, and pyrrolidone. Either one of the foregoing solvents or a mixture of the foregoing solvents can be used.

As an electrolyte salt, any one which is dissolved in a solvent and generates ions can be used. One electrolyte salt or a mixture of two or more electrolyte salts can be used. For example, as a lithium salt, lithium phosphate hexafluoride ($LiPF_6$), lithium borate tetrafluoride ($LiBF_4$), lithium arsenate hexafluoride ($LiAsF_6$), lithium perchlorate ($LiClO_4$), trifluoromethane sulfonic lithium ($LiCF_3SO_3$), bis (trifluoromethane sulfonyl) imido lithium ($LiN(SO_2CF_3)_2$), tris (trifluoromethane sulfonyl) methyl lithium ($LiC(SO_2CF_3)_3$), lithium aluminate tetrafluoride ($LiAlCl_4$), and lithium silicate hexafluoride ($LiSiF_6$) are cited. In particular, lithium phosphate hexafluoride and lithium borate tetrafluoride are preferable in view of oxidation stability. A concentration of the lithium salt in relation to the solvent of 1L is preferably from 0.1 mol to 3.0 mol, and more preferably from 0.5 mol to 2.0 mol.

The high molecular weight compound has a structure, wherein a polymerization compound having an acrylate group or a methacrylate group and containing no ether group is polymerized. As a polymerization compound, for example, monofunctional acrylate, monofunctional methacrylate, multifunctional acrylate, and multifunctional methacrylate respectively containing no ether group are cited. Complete examples of them include acrylic ester, ester methacrylate, acrylic nitrile, methacrylic nitrile, diacrylic ester, triacrylic ester, dimethacrylic ester, and trimethacrylic ester. The reason of using such a polymerization compound containing no ether group is as follows. That is, when an ether group exists, cations are coordinated with the ether group, so that a cation conductivity is lowered.

In particular, as a polymerization compound, a compound having at least three structural parts of a structure expressed by Chemical formula 1, a structure expressed by Chemical formula 2, and a structure expressed by Chemical formula 3 is preferable, since very excellent battery characteristics can be obtained. In this one compound, molar ratios of respective structural parts are, for example, $0.1 \leqq x \leqq 98$, $0 \leqq y \leqq 98$, and $0.1 \leqq z \leqq 98$, where the structural part of Chemical formula 1 is x, the structural part of Chemical formula 2 is y, and the structural part of Chemical formula 3 is z. Bonding relations among respective structural parts can be random. For example, respective structural parts can be bonded in a certain order repeatedly, or in a random order.

Chemical formula 1

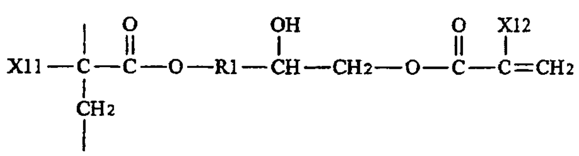

Chemical formula 2

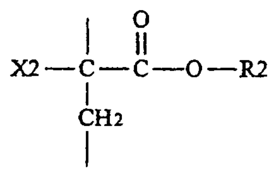

Chemical formula 3

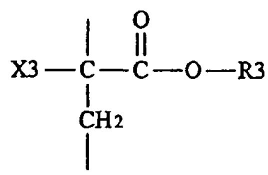

In Chemical formulas 1 to 3, X11, X12, X2, and X3 represent a hydrogen atom or a methyl group, respectively. R1 represents a structural part containing carbon and having no ether group. R1 is preferably an alkylene group whose number of carbon is 10 or less, and more specifically a methylene group ($-CH_2-$), an ethylene group ($-CH_2 CH_2-$) or the like. R2 represents a hydrogen atom or a structural part containing carbon and containing no ether group. R2 is preferably an alkyl group whose number of carbon is 10 or less, and its structure can be a branch structure, and can include cyclic structures. Concrete examples of R2 include a methyl group ($-CH_3$), an ethyl group ($-CH_2 CH_3$), a propyl group ($-CH_2 CH_2 CH_3$), an isopropyl group ($-CH (CH_3)_2$), a butyl group ($-CH_2 CH_2 CH_2 CH_3$), a t-butyl group ($-C (CH_3)_3$), an s-butyl group ($-CH (CH_3) CH_2 CH_3$), a 2-ethylhexyl group ($-CH_2 CH (C_2H_5) CH_2CH_2CH_2CH_3$), and a ciclohexyl group ($-C_6 H_{11}$). R3 represents a hydrogen atom or a structural part containing carbon and having no ether group. R3 is preferably an alkyl group whose number of carbon is 10 or less, or a group expressed by Chemical formula 4, or a group expressed by Chemical formula 5. The alkyl group can have a branch structure, and can include cyclic structures. Concrete examples of R3 include a methyl group, an ethyl group, a propyl group, an isopropyl group, a butyl group, a t-butyl group, an s-butyl group, a 2-ethylhexyl group, and a ciclohexyl group.

Chemical formula 4

$$-(CH_2)_a-(CF_2)_b-C(F)_c-(R32)_d$$

In Chemical formula 4, R32 represents a hydrogen atom, a fluorine atom, or a methyl fluoride ($CF_3$) group. a is an integer number of 0 to 6, b is an integer number of 0 to 16, c is 1 or 2, and d is 1 or 2.

Chemical formula 5

— R33— R34

In Chemical formula 5, R33 represents a bivalent linkage group, and R34 represents a cyclic carbonate group.

As such a polymerization compound, for example, a compound having a structure expressed by Chemical formula 6, a structure expressed by Chemical formula 7, and a structure expressed by Chemical formula 8 is preferable.

Chemical formula 6

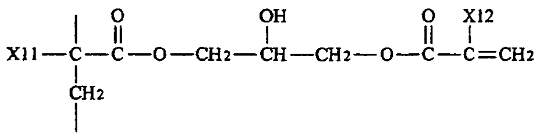

Chemical formula 7

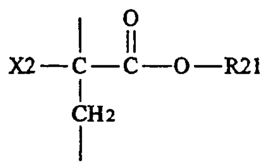

Chemical formula 8

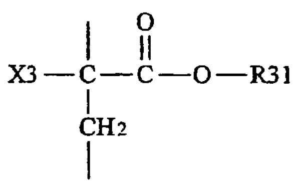

In Chemical formulas 6 to 8, X11, X12, X2, and X3 represent a hydrogen atom or a methyl group, respectively. R21 represents a hydrogen atom, an alkyl group whose number of carbon is 10 or less, or a group having an aromatic ring whose number of carbon is 12 or less. R31 represents a hydrogen atom, an alkyl group whose number of carbon is 10 or less, a group having an aromatic ring whose number of carbon is 12 or less, a group expressed by Chemical formula 4, or a group expressed by Chemical formula 5.

Concrete examples of the polymerization compound include a compound having a structure expressed by Chemical formula 6, a structure expressed by Chemical formula 9, and a structure expressed by Chemical formula 10.

Chemical formula 9

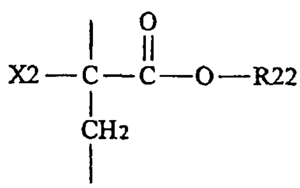

Chemical formula 10

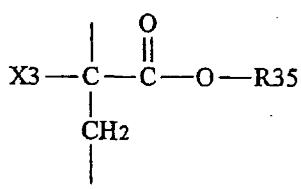

In Chemical formulas 6, 9, and 10, X11, X12, X2, and X3 represent a hydrogen atom or a methyl group, respectively. R22 and R35 respectively represent an alkyl group whose number of carbon is 6 or less.

Further, a compound having a structure expressed by Chemical formula 6, a structure expressed by Chemical formula 9, and a structure expressed by Chemical formula 11 can be cited.

Chemical formula 11

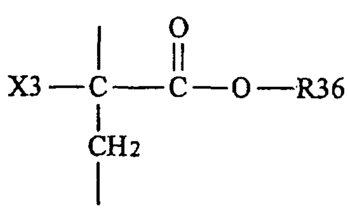

In Chemical formulas 6, 9, and 11, X11, X12, X2, and X3 represent a hydrogen atom or a methyl group, respectively. R22 represents an alkyl group whose number of carbon is 6 or less. R36 represents a group having an aromatic ring whose number of carbon is 12 or less. As R36, for example, a group expressed by Chemical formula 12 can be cited.

Chemical formula 12

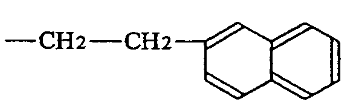

Further, a compound having a structure expressed by Chemical formula 6, a structure expressed by Chemical formula 9, and a structure expressed by Chemical formula 13 can be cited.

Chemical formula 13

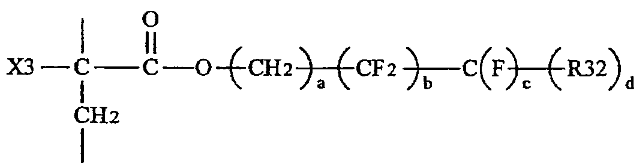

In Chemical formulas 6, 9, and 13, X11, X12, X2, and X3 respectively represent a hydrogen atom or a methyl group. R22 represents an alkyl group whose carbon number is 6 or less. R32 represents a hydrogen atom, a fluorine atom, or a methyl fluoride group. a is an integer number of 0 to 6, b is an integer number of 0 to 16, c is 1 or 2, and d is 1 or 2.

Further, a compound having a structure expressed by Chemical formula 6, a structure expressed by Chemical formula 9, and a structure expressed by Chemical formula 14 can be cited.

Chemical formula 14

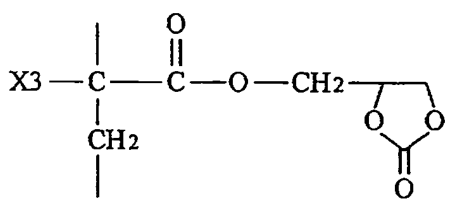

In Chemical formulas 6, 9, and 14, X11, X12, X2, and X3 respectively represent a hydrogen atom or a methyl group. R22 represents an alkyl group whose number of carbon is 6 or less.

As the polymerization compound, only one kind can be used. However, it is desirable to use a mixture of a monofunctional body and a multifunctional body, or one or more multifunctional bodies. With such constructions, mechanical strength and electrolytic solution holding characteristics of the high molecular weight electrolyte 23 become easy to consist with each other.

A ratio of the high molecular weight compound in relation to the electrolytic solution is preferably from 3 parts by mass to 10 parts by mass in relation to the electrolytic solution of 100 parts by mass. When a ratio of the high molecular weight compound is low, sufficient mechanical strength cannot be obtained. When a ratio of the high molecular weight compound is high, ion conductivity is lowered.

The separator 24 is made of an insulating thin film having a high ion permeability and a given mechanical strength, such as a porous film made of a polyolefin material such as polypropylene and polyethylene, and a porous film made of an inorganic material such as a ceramics nonwoven cloth. It is possible to use the separator 24, wherein two or more of the foregoing porous films are layered.

In this secondary battery, when charged, lithium ions are extracted from the cathode active material layer 21B, and are inserted in the anode active material layer 22B through the high molecular weight electrolyte 23. When discharged, for example, lithium ions are extracted from the anode active material layer 22B, and are inserted in the cathode active material layer 21B through the high molecular weight electrolyte 23. In this regard, mobility of lithium ions depends on the electrolytic solution contained in the high molecular weight electrolyte 23. In this embodiment, the high molecular weight electrolyte 23 contains a high molecular weight compound having a structure wherein a polymerization compound containing no ether group is polymerized. Therefore, transfer of lithium ions becomes easy, and high ion conductivity can be obtained.

This secondary battery can be manufactured as follows, for example.

First, for example, the cathode 21 is fabricated by forming the cathode active material layer 21B on the cathode

current collector 21A. The cathode active material layer 21B is formed by preparing a cathode mixture by mixing cathode active material powders, a conductive agent and a binder as necessary, dispersing the cathode mixture in a carrier fluid such as N-methyl-2-pyrrolidone to prepare a cathode mixture slurry, and applying this cathode mixture slurry to the cathode current collector 21A, and drying and compression-molding the resultant.

For example, the anode 22 is fabricated by forming the anode active material layer 22B on the anode current collector 22A. The anode active material layer 22B is formed, for example, by preparing an anode mixture by mixing anode active material powders, and a binder as necessary, dispersing the anode mixture in a carrier fluid such as N-methyl-2-pyrrolidone to prepare an anode mixture slurry, and applying this anode mixture slurry to the anode current collector 22A, and drying and compression-molding the resultant.

The anode active material layer 22B can be formed, for example, by layering the anode active material on the anode current collector 22A by vapor-phase deposition method or liquid-phase deposition method. Further, the anode active material layer 22B can be formed by sintering method, wherein a precursor layer containing particle anode active material is formed on the anode current collector 22A, and then the resultant is sintered. Furthermore, two or more methods of vapor-phase deposition method, liquid-phase deposition method, and sintering method can be combined to form the anode active material layer 22B. When the anode active material layer 22B is formed by at least one method from the group consisting of vapor-phase deposition method, liquid-phase deposition method, and sintering method, in some cases, the anode active material layer 22B which is alloyed with the anode current collector 22A at least on part of the interface with the anode current collector 22A can be formed.

In order to further alloy the interface between the anode current collector 22A and the anode active material layer 22B, it is possible to further provide heat treatment in a vacuum atmosphere or a non-oxidizing atmosphere. In particular, this heat treatment is preferably provided as necessary when the anode active material layer 22B is formed by plating mentioned below, since the anode active material layer 22B may be hard to be alloyed even on the interface with the anode current collector 22A in some cases. This heat treatment is also preferably provided as necessary when the anode active material layer 22B is formed by vapor-phase deposition method, since characteristics may be improved by further alloying the interface between the anode current collector 22A and the anode active material layer 22B in some cases.

As vapor-phase deposition method, physical deposition method or chemical deposition method can be used depending on types of anode active materials. Specifically, vacuum deposition method, spattering method, ion plating method, laser ablation method, thermal CVD (Chemical Vapor Deposition) method, plasma CVD method or the like are available. As liquid-phase deposition method, known methods such as electrolytic plating and electroless plating can be utilized. Regarding sintering method, known methods are available. For example, atmosphere sintering method, reaction sintering method, and hot press sintering method are available. However, vacuum deposition method, spattering method, CVD method, electrolytic plating and non-electrolytic plating are preferable.

Next, the cathode terminal 11 is attached to the cathode 21, and the anode terminal 12 is attached to the anode 22. Then, the separator 24, the cathode 21, the separator 24, and the anode 22 are sequentially layered and wound. The protective tape 25 is adhered to the outermost peripheral part thereof to form a winding electrode body. Subsequently, this winding electrode body is sandwiched between exterior members 30A and 30B, and outermost peripheral edge parts except for one side are provided with thermal fusion bonding to obtain a pouched form.

After that, an electrolyte composition of matter containing the foregoing electrolytic solution, the polymerization compound, and a polymerization initiator if necessary is prepared. This electrolyte composition of matter is injected inside the winding electrode body from the opening of the exterior members 30A and 30B. Then, thermal fusion bonding is applied to the opening of the exterior members 30A and 30B to enclose the winding electrode body. As a polymerization initiator, known substances can be used. Examples of the polymerization initiator include an azobis compound, peroxide, hydroperoxide, peroxyester, and a redox catalyst. Concrete examples of the polymerization initiator include potassium persulfate, ammonium persulfate, t-butyl peroctoate, benzoyl peroxide, isopropyl percarbonate 2,4-dichlorobenzoyl peroxide, methyl ethyl ketone peroxide, cumene hydro peroxide, azobis isobutyro nitrile, 2,2'-azobis (2-amino dipropane) hydro chloride, t-butyl peroxineodecanoate, t-hexyl peroxineodecanoate, 1,1,3,3-tetramethyl butyl peroxineodecanoate, t-butylperoxipivarate, t-hexylperoxipivarate, 1,1,3,3-tetramethyl butyl peroxi-2-ethylhexanoate, t-butylperoxi-2-ethyl hexanoate, t-butyl peroxiisobutyrate, t-butylperoxi-3,5,5-trimethyl hexanoate, t-butyl peroxilaurate, and t-butyl peroxi acetate.

Specially, peroxyester polymerization initiators such as t-butyl peroxineodecanoate, t-hexyl peroxineodecanoate, 1,1,3,3-tetramethyl butyl peroxineodecanoate, t-butylperoxipivarate, t-hexylperoxipivarate 1;1,3,3-tetramethyl butyl peroxi-2-ethylhexanoate, t-butylperoxi-2-ethyl hexanoate, t-butyl peroxiisobutyrate, t-butylperoxi-3,5,5-trimethyl hexanoate, t-butyl peroxilaurate, and t-butyl peroxi acetate are preferable. With such a peroxyester polymerization initiator, gas generation during gelation can be inhibited, sufficient gelation can be realized and sufficient mechanical strength can be obtained even when a ratio of the polymerization compound is lowered.

Next, the gelatinous high molecular weight electrolyte 23 is formed by heating the winding electrode body wherein the electrolyte composition of matter is injected from outside the exterior members 30A and 30B to polymerize

the polymerization compound. In this regard, heating temperatures are preferably 90°C or less, and more preferably 75°C or less. The secondary battery shown in Figs. 1 and 2 is thereby completed.

This secondary battery can be also manufactured as follows. For example, instead of injecting the electrolyte composition of matter after fabricating the winding electrode body, it is possible that the cathode 21 and the anode 22 are wound after applying the electrolyte composition of matter on the cathode 21 and the anode 22, the winding body is enclosed inside the exterior members 30A and 30B, and then heated. It is also possible that the cathode 21 and the anode 22 are wound after the electrolyte composition of matter is applied on the cathode 21 and the anode 22 and the high molecular weight electrolyte 23 is formed by heating, and then the winding body is enclosed inside the exterior members 30A and 30B. However, it is preferable that heating is performed after the winding body is enclosed inside the exterior members 30A and 30B. If the cathode 21 and the anode 22 are wound after forming the high molecular weight electrolyte 23 by heating, interface connection between the high molecular weight electrolyte 23 and the separator 24 may become insufficient, and an inner resistance may become high.

As above, in this embodiment, the high molecular weight electrolyte 23 contains the high molecular weight compound having the structure wherein the polymerization compound containing no ether group is polymerized. Therefore, ions can easily transfer, and a high ion conductivity equal to of the electrolytic solution can be obtained. Consequently, when the anode 22 contains at least one from the group consisting of simple substances and compounds of silicon or tin, excellent cycle characteristics can be obtained.

Further, when the high molecular weight compound has the structure wherein the high molecular weight compound having respective structures expressed by Chemical formulas 1 to 3 is polymerized, higher effects can be obtained.

[Examples]

Further descriptions will be given in detail of concrete examples of the invention with reference to the drawings. In Examples, so-called flat type secondary batteries shown in Fig. 3 (or paper type/card type secondary batteries) were manufactured. In this secondary battery, a cathode 41 and an anode 42 in which an electrolyte composition of matter is impregnated were layered with a separator 44 in between, the layered body was enclosed in an exterior member 45, and then a high molecular weight electrolyte 43 was formed by heating.

(Examples 1 to 16)

First, the cathode 41 was fabricated as below. Lithium carbonate ($Li_2CO_3$) and cobalt carbonate ($CoCO_3$) were mixed by a ratio of $Li_2CO_3$:$CoCO_3$=0.5 mol:1 mol. The mixture was fired for 5 hours at 900°C in the air to obtain lithium cobalt complex oxide ($LiCoO_2$) as a cathode active material. Next, 85 parts by mass of the obtained lithium cobalt complex oxide, 5 parts by mass of graphite as a conductive agent, and 10 parts by mass of polyvinylidene fluoride as a binder were mixed to prepare a cathode mixture. Subsequently, this cathode mixture was dispersed in N-methyl-2-pyrolidone of a carrier fluid to obtain a cathode mixture slurry. This cathode mixture slurry was uniformly applied on a cathode current collector 41A made of an aluminum foil having a thickness of 20 μm, dried, and compression-molded by a rolling press machine to form a cathode active material layer 41B. Then, a cathode terminal 46 was attached to the cathode 41.

The anode 42 was fabricated as follows. In Examples 1, 6, 11, 13, and 15, a layer made of tin having a thickness of 3 μm was formed on an anode current collector 42A made of an electrolytic copper foil having a thickness of 18 μm by using electron beam evaporation. Then, the resultant was heat-treated for 24 hours at 200°C at a vacuum degree of $1 \times 10^{-5}$ Torr (about $1.33 \times 10^{-3}$ Pa) to form an anode active material layer 42B.

In Examples 2 and 7, first, the anode current collector 42A made of a rolled copper foil with a cleaned surface was soaked in a tin-nickel (Sn-Ni) alloy plating bath, and the anode current collector 42A was electrified as a cathode. A layer made of a tin-nickel alloy having a thickness of about 3 μm was thereby deposited. Next, this layer was washed with water, dried, and heat-treated at 200°C for 24 hours. The anode active material layer 42B was thereby formed.

In Examples 3 and 8, as a raw material for the anode active material, tin powders, cobalt powders, and zinc powders were prepared. The tin powders, cobalt powders, and zinc powders were checkweighed so that their total of 50 g could be obtained by an atomic ratio of tin:cobalt:zinc =2.0:2.2:0.80. Then, mechanical alloying treatment was provided for 40 hours in an argon atmosphere by using a planetary ball mill, and black powders of a tin-cobalt-zinc (Sn-Co-Zn) alloy were obtained. In this regard, a mass ratio between the grinded media and the raw material was 25: 1. Next, the obtained black powders were sieved, and large particles were removed. The anode active material was thereby obtained.

After producing the tin-cobalt-zinc alloy, 85 wt% of tin-cobalt-zinc alloy, 5 wt% of needle artificial graphite, which is an anode active material and a conductive agent, 10 wt% of polyvinylidene fluoride as a binder were mixed to prepare an anode mixture. Further, this anode mixture was dispersed in N-methyl-2-pyrolidone of a carrier fluid to

obtain an anode mixture slurry. Subsequently, this anode mixture slurry was applied on the anode current collector 42A made of an electrolytic copper foil having a thickness of 18 µm, dried, and compression-molded by a rolling press machine to form the anode active material layer 42B.

In Examples 4 and 9, first, 90 wt% of silicon powders having an average particle diameter of 1 µm as an anode active material and 10 wt% of polyvinylidene fluoride as a binder were mixed to prepare an anode mixture. Further, this anode mixture was dispersed in N-methyl-2-pyrolidone of a carrier fluid to obtain an anode mixture slurry. Subsequently, this anode mixture slurry was applied on the anode current collector 42A made of an electrolytic copper foil having a thickness of 18 µm, dried, pressurized, and heat-treated for 12 hours at 400°C in a vacuum atmosphere. The anode active material layer 42B was thereby formed.

In Examples 5, 10, 12, 14, and 16, the anode active material layer 42B made of amorphous silicon was formed on the anode current collector 42A made of an electrolytic copper foil having a thickness of 18 µm by electron beam evaporation.

After fabricating the anode 42, an anode terminal 47 was attached to the anode 42.

Further, 5 parts by mass of polymerization compound solution, and 0.1 parts by mass of t-butyl peroxineodecanoate as a peroxiester polymerization initiator were mixed in relation to 100 parts by mass of electrolytic solution to produce an electrolyte composition of matter. As an electrolytic solution, one wherein hexafluoride lithium phosphate was dissolved by a ratio of 1 mol/L into a solvent wherein ethylene carbonate and diethyl carbonate were mixed by a mass ratio of 3:7 was used.

As a polymerization compound, in Examples 1 to 5, one wherein trimethylol propane triacrylate shown in Chemical formula 15 and neopentyl glycol diacrylate shown in Chemical formula 16 were mixed by a mass ratio of trimethylol propane triacrylate:neopentyl glycol diacrylate=2:8 was used. In Examples 6 to 10, a compound having three structural parts shown in Chemical formula 17 by a molar ratio of a:b:c=30:40:30 was used. In Examples 11 and 12, a compound having three structural parts shown in Chemical formula 18 by a molar ratio of a:b:c=30:60:10 was used. In Examples 13 and 14, a compound having three structural parts shown in Chemical formula 19 by a molar ratio of a:b:c=20:80:10 was used. In Examples 15 and 16, a compound having three structural parts shown in Chemical formula 20 by a molar ratio of a:b:c=10:60:20 was used.

Chemical formula 15

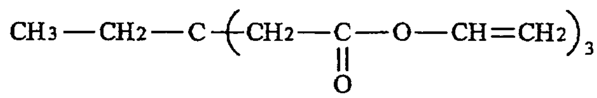

Chemical formula 16

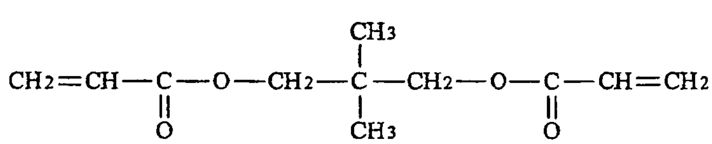

Chemical formula 17

(a) 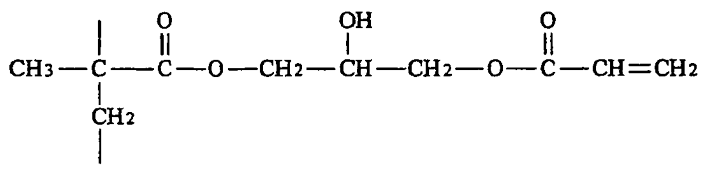

(b) 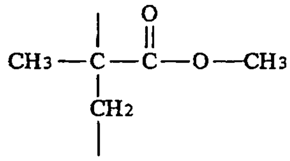

(c) 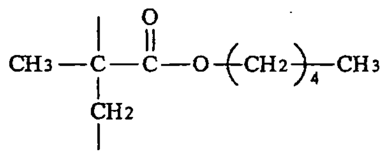

Chemical formula 18

(a) 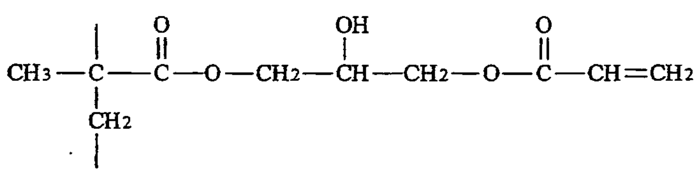

(b) 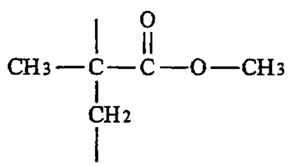

(c) 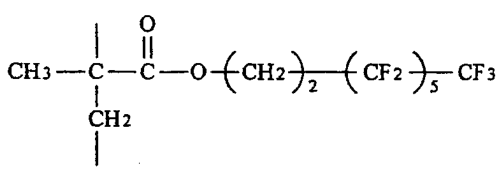

Chemical formula 19

(a) 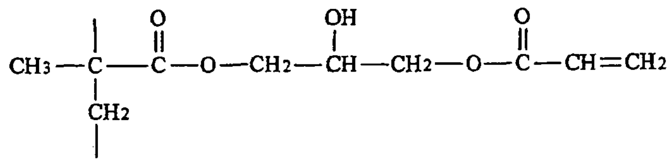

(b) 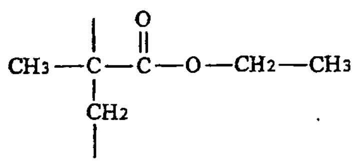

(c) 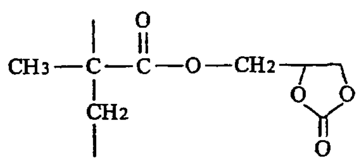

Chemical formula 20

(a) 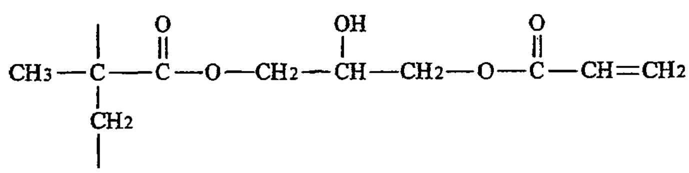

(b) 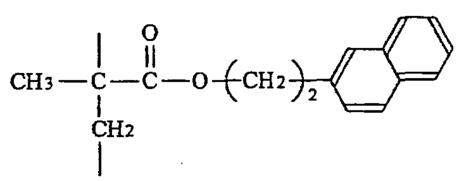

(c) 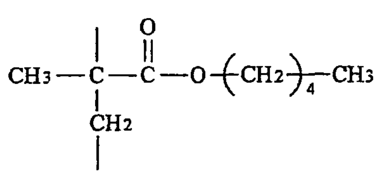

After that, an electrolyte composition of matter was impregnated in the fabricated cathode 41 and the anode 42. Then, the cathode 41 and the anode 42 were contacted with the separator 44 made of a micro-porous polyethylene film having a thickness of 25 μm in between, and enclosed inside the exterior member 45 under a reduced pressure. For the exterior member 45, a wetproof aluminum laminated film wherein a nylon film having a thickness of 25 μm, an aluminum foil having a thickness of 40 μm, and a polypropylene film having a thickness of 30 μm were layered in this order from the outermost layer was used. After that, the resultant was sandwiched between glass plates, heated for 30 minutes at 75 °C to polymerize the polymerization compound. The electrolyte composition of matter was thereby gelatinized to become the high molecular weight electrolyte 43. The secondary battery shown in Fig. 3 was thereby obtained.

As Comparative example 1 in relation to these Examples, a secondary battery was manufactured in a manner similar to in Example 1, except that as a polymerization compound, a compound shown in Chemical formula 21 was used. As Comparative example 2 in relation to these Examples, a secondary battery was manufactured in a manner similar to in Example 3, except that graphite was used for fabricating the anode 42 instead of the tin-cobalt-zinc alloy. As Comparative example 3 in relation to these Examples, a secondary battery was manufactured in a manner similar to in Comparative example 2, except that as a polymerization compound, a compound shown in Chemical formula 21 was used.

Chemical formula 21

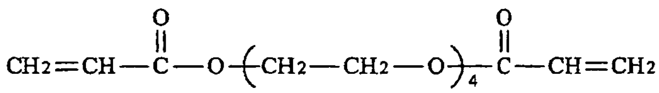

Regarding the respective obtained secondary batteries of Examples 1 to 16 and Comparative examples 1 to 3, constant current and constant voltage charge of 100 mA was conducted at 23°C for 15 hours until an upper limit of 4.2 V Next, constant current discharge of 100 mA was conducted until a final voltage of 2.5 V and initial discharge capacities were obtained. After that, for respective secondary batteries, constant current and constant voltage charge of 500 mA was conducted at 23°C for 2 hours until an upper limit of 4.2 V The secondary batteries were stored for 5 days at 60°C. Next, 50 cycles of charge and discharge, wherein constant current discharge of 500 mA was conducted until a final voltage of 2.5 V was conducted. Then, capacity retention ratio at 50th cycle where a discharge capacity at 1st cycle in discharge of 500 mA was 100% were obtained. The results are shown in Table 1.

Table 1

| | Polymerization compound | Anode active material layer | | Initial discharge capacity (mAh) | Capacity retention ratio (%) |
|---|---|---|---|---|---|
| | | Material | Forming method | | |
| Example 1 | Chemical formulas 15+16 | Sn | Deposition | 776 | 73 |
| Example 2 | Chemical formulas 15+16 | Sn-Ni | Plating | 765 | 72 |
| Example 3 | Chemical formulas 15+16 | Sn-Co-Zn | Coating | 769 | 76 |
| Example 4 | Chemical formulas 15+16 | Si | Sintering | 803 | 84 |
| Example 5 | Chemical formulas 15+16 | Si | Deposition | 801 | 82 |
| Example 6 | Chemical formula 17 | Sn | Deposition | 779 | 76 |
| Example 7 | Chemical formula 17 | Sn-Ni | Plating | 770 | 79 |
| Example 8 | Chemical formula 17 | Sn-Co-Zn | Coating | 771 | 79 |
| Example 9 | Chemical formula 17 | Si | Sintering | 805 | 88 |
| Example 10 | Chemical formula 17 | Si | Deposition | 802 | 89 |
| Example 11 | Chemical formula 18 | Sn | Deposition | 777 | 73 |

Table 1 (continued)

| | Polymerization compound | Anode active material layer | | Initial discharge capacity (mAh) | Capacity retention ratio (%) |
|---|---|---|---|---|---|
| | | Material | Forming method | | |
| Example 12 | Chemical formula 18 | Si | Deposition | 800 | 82 |
| Example 13 | Chemical formula 19 | Sn | Deposition | 769 | 72 |
| Example 14 | Chemical formula 19 | Si | Deposition | 798 | 81 |
| Example 15 | Chemical formula 20 | Sn | Deposition | 778 | 73 |
| Example 16 | Chemical formula 20 | Si | Deposition | 804 | 83 |
| Comparative example 1 | Chemical formula 21 | Sn | Deposition | 750 | 65 |
| Comparative example 2 | Chemical formula 17 | Graphite | Coating | 490 | 62 |
| Comparative example 3 | Chemical formula 21 | Graphite | Coating | 488 | 61 |

As shown in Table 1, according to Examples 1 to 16, high values regarding both the initial capacity and the capacity retention ratio could be obtained compared to Comparative example 1. In particular, the capacity retention ratios of Examples 1 to 16 were significantly improved compared to of Comparative example 1. Meanwhile, in Comparative examples 2 and 3, there was almost no difference in both the initial capacity and the capacity retention ratio.

That is, it was found that in the secondary battery, wherein the anode 42 contains a simple substance or a compound of silicon or tin, when the high molecular electrolyte 43 contains a high molecular weight compound having a structure wherein a polymerization compound containing no ether group is polymerized, a high capacity could be obtained, and cycle characteristics could be improved.

In the foregoing Examples, descriptions have been made specifically with reference to some examples about the electrolytic solution, the polymerization compound, and the peroxyester polymerization initiator. However, similar results can be obtained when other polymerization compound containing no ether group, or other polymerization initiator is used.

While the invention has been described with reference to the embodiment and Examples, the invention is not limited to the foregoing embodiment and Examples, and various modifications may be made. For example, in the foregoing embodiment and Examples, descriptions have been given of the case, wherein the high molecular weight electrolytes 23 and 43 contain the electrolytic solution and the high molecular weight compound having the structure wherein the polymerization compound having no ether group is polymerized. However, the invention can be applied to the case where the high molecular weight electrolytes 23 and 43 contain other materials, an additive and the like.

In the foregoing embodiment and Examples, the high molecular weight electrolytes 23 and 43 are produced by heating the electrolyte composition of matter. However, the high molecular weight electrolytes 23 and 43 can be heated while being pressurized, or can be pressurized after being heated.

Further, in the foregoing embodiment and Examples, constructions of the secondary batteries have been explained by using examples. However, the invention can be applied to batteries having other constructions. For example, in the foregoing embodiment, descriptions have been given of the winding laminated type secondary battery. In the foregoing Examples, descriptions have been given of the monolayer laminated type secondary battery. However, the invention can be applied to layered laminated type secondary batteries, in addition, so-called cylinder type, square type, coin type and button type secondary batteries. Further, the invention can be applied not only to the secondary batteries, but also to primary batteries.

In addition, in the foregoing embodiment and Examples, descriptions have been given of the case, wherein the lithium salt is used as an electrolyte salt. However, the invention can be applied to the case, wherein other alkali metal salt such as a sodium salt and a potassium salt; an alkali earth metal salt such as a magnesium salt and a calcium salt; or other light metal salt such as an aluminum salt is used. In this regard, a cathode active material, an

anode active material, a nonaqueous solvent and the like are selected corresponding to respective electrolyte salts.

As described above, according to the battery of the invention, the high molecular weight electrolyte contains the high molecular weight compound having the structure wherein the polymerization compound containing no ether group is polymerized. Therefore, ions can transfer easily, and a high ion conductivity equal to of the electrolytic solution can be obtained. Therefore, when the anode contains at least one from the group consisting of simple substances and compounds of silicon or tin, excellent cycle characteristics can be obtained.

In particular, according to the battery of one aspect of the invention, the high molecular weight compound has a structure wherein the polymerization compound having respective structures expressed by Chemical formulas 1, 2, and 3 is polymerized. Therefore, higher effects can be obtained.

Obviously many modifications and variations of the present invention are possible in the light of the above teachings. It is therefore to be understood that within the scope of the appended claims the invention may be practiced otherwise than as specifically described.

## Claims

1. A battery comprising:

    a cathode;
    an anode; and
    a high molecular weight electrolyte,

    wherein the anode contains at least one from the group consisting of simple substances and compound of silicon (Si) or tin (Sn), and the high molecular weight electrolyte contains a high molecular weight compound having a structure wherein a polymerization compound having an acrylate group or a methacrylate group and containing no ether group is polymerized.

2. A battery according to claim 1, wherein the high molecular weight compound has a structure wherein a polymerization compound having a structure expressed by Chemical formula 1, a structure expressed by Chemical formula 2, and a structure expressed by Chemical formula 3 is polymerized.

Chemical formula 1

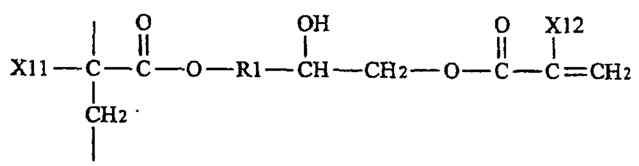

Chemical formula 2

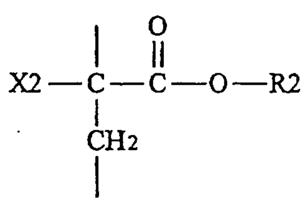

Chemical formula 3

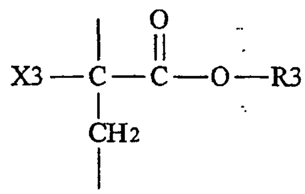

(In Chemical formulas 1 to 3, X11, X12, X2, and X3 represent a hydrogen atom or a methyl group, respectively. R1 represents a structural part containing carbon and no ether group. R2 and R3 respectively represent a hydrogen atom or a structural part containing carbon and no ether group.)

**3.** A battery according to claim 1, wherein the high molecular weight compound has a structure wherein a polymerization compound having a structure expressed by Chemical formula 4, a structure expressed by Chemical formula 5, and a structure expressed by Chemical formula 6 is polymerized.

Chemical formula 4

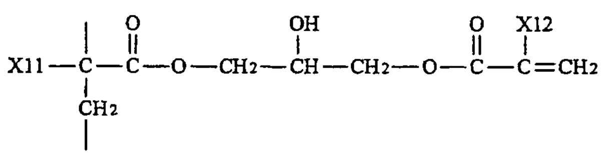

Chemical formula 5

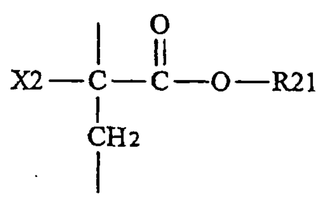

Chemical formula 6

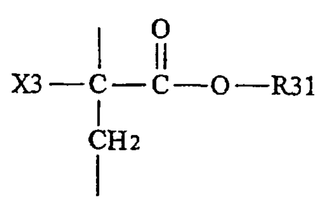

(In Chemical formulas 4 to 6, X11, X12, X2, and X3 represent a hydrogen atom or a methyl group, respectively. R21 represents a hydrogen atom, an alkyl group whose number of carbon is 10 or less, or a group having an aromatic ring whose number of carbon is 12 or less. R31 represents a hydrogen atom, an alkyl group whose

number of carbon is 10 or less, a group having an aromatic ring whose number of carbon is 12 or less, a group expressed by Chemical formula 7, or a group expressed by Chemical formula 8.)

Chemical formula 7

$$-(CH_2)_a-(CF_2)_b-C(F)_c-(R32)_d$$

(In Chemical formula 7, R32 represents a hydrogen atom, a fluorine atom, or a methyl fluoride ($CF_3$) group. a is an integer number of 0 to 6, b is an integer number of 0 to 16, c is 1 or 2, and d is 1 or 2.)

Chemical formula 8

—R33—R34

(In Chemical formula 8, R33 represents a bivalent linkage group, and R34 represents a cyclic carbonate group.)

**4.** A battery according to claim 1, wherein the high molecular weight compound has a structure wherein a polymerization compound having a structure expressed by Chemical formula 9, a structure expressed by Chemical formula 10, and a structure expressed by Chemical formula 11 is polymerized.

Chemical formula 9

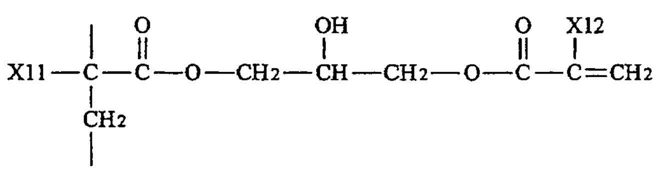

Chemical formula 10

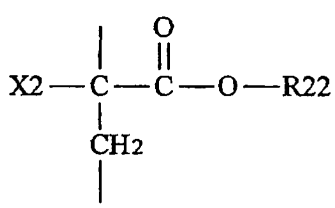

Chemical formula 11

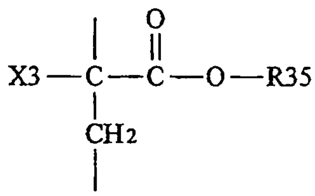

(In Chemical formulas 9 to 11, X11, X12, X2, and X3 represent a hydrogen atom or a methyl group, respectively. R22 and R35 respectively represent an alkyl group whose number of carbon is 6 or less.

**5.** A battery according to claim 1, wherein the anode comprises an anode current collector, and an anode active material layer which is alloyed with the anode current collector at least on part of an interface with the anode current collector provided on the anode current collector.

**6.** A battery according to claim 1, wherein the anode comprises an anode current collector, and an anode active material layer formed by at least one method from the group consisting of vapor-phase deposition method, liquid-phase deposition method, and sintering method on the anode current collector.

**7.** A battery according to claim 1, wherein the cathode, the anode, and the high molecular weight electrolyte are housed inside an exterior member, and the high molecular weight compound is polymerized inside the exterior member.

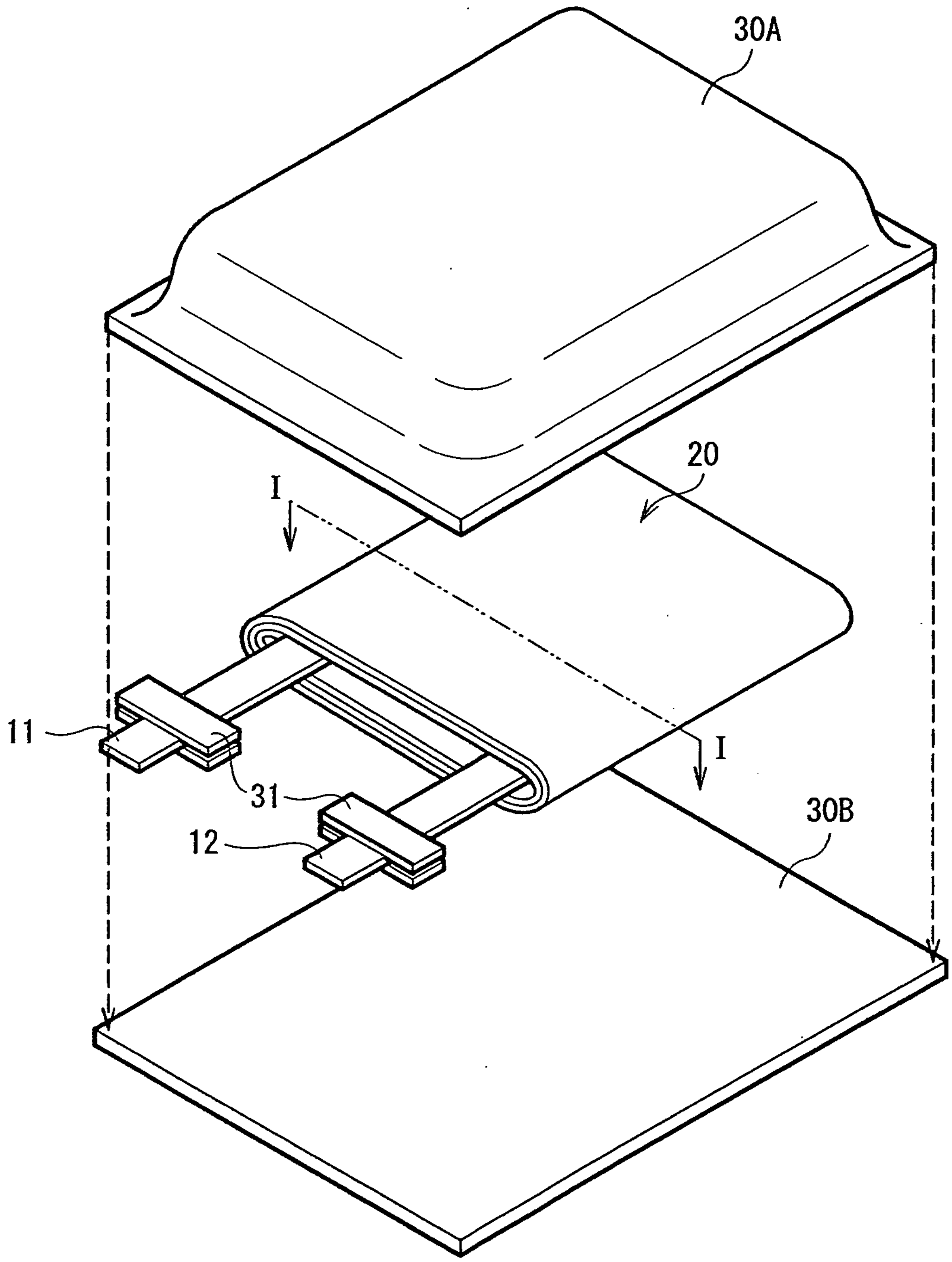


FIG. 1

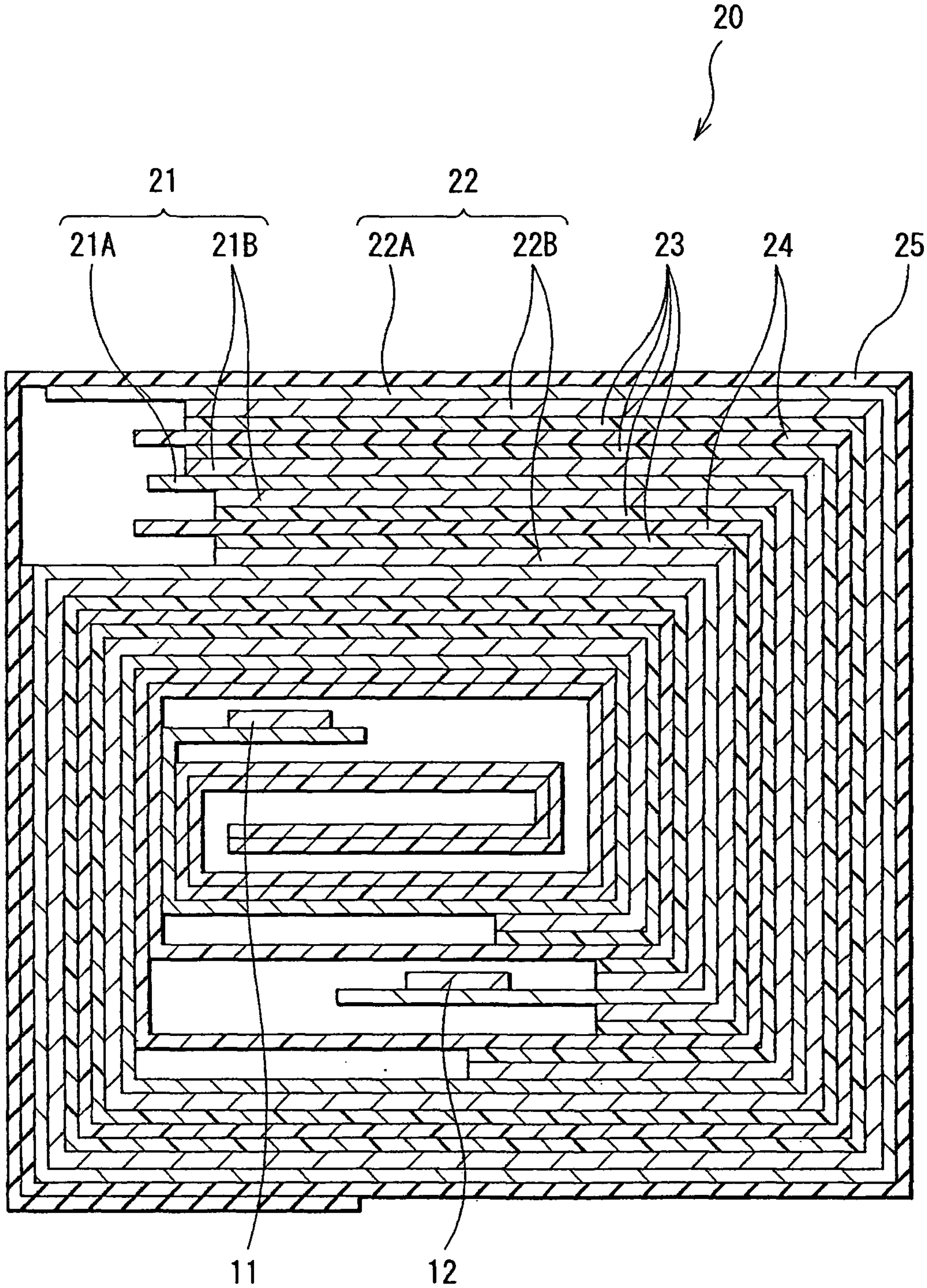


FIG. 2

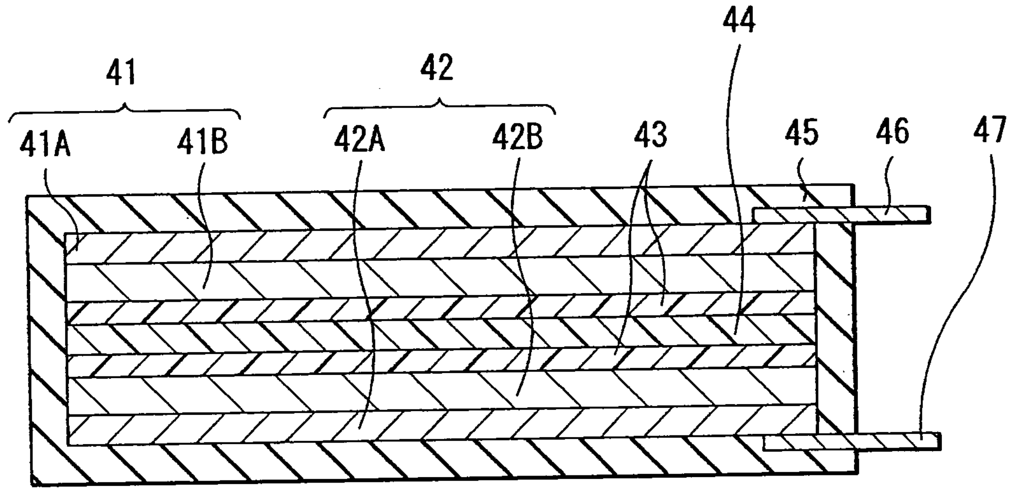


FIG. 3